# FASCICULE DE BREVET EUROPEEN

(11) **EP 4 139 064 B1**
(45) Date de publication et mention de la délivrance du brevet: **10.12.2025**
(21) Numéro de dépôt: 21717020.8
(22) Date de dépôt: 01.04.2021
(51) Int. Cl.: B01F 27/50, B01F 27/94, B01F 27/95, B01F 35/90, B07B 1/24, B07B 1/26, B09B 3/40, B29B 17/02, B29B 17/04

(54) **RAFFINEUR, INSTALLATION ET PROCÉDÉ POUR LE TRAITEMENT DE PRODUITS COMPOSITES**
VERFEINERUNGSMACHINE, VERFEINERUNGSANLAGE UND VERFEINERUNGSPROZESS FÜR DIE VERARBEITUNG VON KOMPOSIT-PRODUKTEN
REFINER, INSTALLATION AND PROCESS FOR THE PROCESSING OF COMPOSITE PRODUCTS

(30) Priorité: 22.04.2020 FR 2004002
(43) Date de publication de la demande: 01.03.2023
(73) Titulaire: SOPREMA, 67100 Strasbourg (FR)
(72) Inventeur: BINDSCHEDLER, Pierre-Etienne, 67000 Strasbourg (FR); BALL, Patrick, 67140 Barr (FR)
(74) Mandataire: Ipsilon
(86) Numéro de dépôt international: PCT/EP2021/058738
(87) Numéro de publication internationale: WO 2021/213794

(56) Documents cités:
- WO-A1-03/045562
- RU-C1- 2 232 642
- US-A1- 2010 190 893

## Description

La présente invention concerne le domaine du traitement de produits composites à base de matière(s) thermoplastique(s), notamment polymériques et/ou bitumineuses, en particulier dans un contexte de revalorisation et de recyclage de déchets de chantiers et d'usines, et a pour objet un raffineur pour le traitement de tels produits, préférentiellement prétraités, ainsi qu'une installation le comprenant et un procédé de commande d'un tel raffineur.

Dans le cadre de la tendance générale à rechercher une possible valorisation des déchets, une demande grandissante, et actuellement non solutionnée de manière satisfaisante, ni au niveau technique, ni au niveau économique, concerne le traitement des déchets d'usine et surtout de chantiers dans le domaine de l'étanchéité des bâtiments et des ouvrages de génie civil, en particulier en relation avec les membranes d'étanchéité bitumineuses.

Le principal problème rencontré, et à ce jour non solutionné de manière satisfaisante, concerne la présence, souvent intriquée avec la matière à valoriser (essentiellement le liant bitumineux), de composants non valorisables, notamment des particules solides dures, du type métalliques, minérales ou autres (provenant d'éléments d'assemblage ou de fixation, de couches de recouvrement, de couches de protection en surface de charges minérales et fibreuses, ou similaires).

En particulier, les déchets de déconstruction du marché de la rénovation représentent à ce jour un gisement potentiel important de membranes d'étanchéité à traiter, estimé à ce jour à environ 100 000 tonnes par an en France (estimation par la Chambre Syndicale Française de l'Etanchéité), ce gisement étant renouvelé chaque année. Le coût d'enfouissement de ces déchets augmente depuis de nombreuses années, et cette tendance devrait se poursuivre, surtout qu'aucune véritable solution industrielle de traitement des déchets de déconstruction n'est proposée à ce jour.

Associée à de fortes tensions sur les matières premières pétrochimiques comme le bitume par exemple, il existe donc une demande importante et constante pour tenter de trouver une solution industrielle efficiente pour transformer les déchets évoqués ci-dessus en matières premières pour la production de membranes d'étanchéité ou de produits d'étanchéité similaires.

Or, la constitution et donc le traitement de ces déchets sont complexes, car lors de réfections de toitures de bâtiments, il est possible, et pratique courante, de superposer plusieurs couches de membranes les unes sur les autres, et de les assembler par collage ou soudure, et de les fixer mécaniquement au support.

Toutefois, au bout d'un certain nombre de réfections (dépendant de la législation du pays concerné en la matière), il est nécessaire techniquement et obligatoire administrativement d'enlever la totalité du système de couverture et de mettre en place une nouvelle étanchéité sur la toiture (à charpente ; toiture-terrasse ou autre) à l'état brut.

Les déchets récupérés à l'issue de cette opération d'enlèvement total, dits déchets de déconstruction, comprennent, pour l'essentiel, des stratifiés de membranes bitumeuses accolées les unes aux autres.

Ces membranes bitumeuses, qui constituent ou contiennent les produits à valoriser, sont généralement constituées d'une armature (par ex. : Polyester non tissé PNT ou voile de verre...), d'un liant bitumineux (ex : mélange bitume, polymères, additifs, charges...), et d'une finition de surface (ex : granulés d'ardoises, sable, feuilles d'aluminium complexées, autres couches de protection particulaires ou granulaires,...).

Il est connu de prétraiter (par exemple : par cisaillement, chauffage, broyage, extraction sélective, séparation, ...) les produits composites formés pour les déchets précités jusqu'à obtenir un produit semi-liquide visqueux chaud, débarrassé des polluants macroscopiques solides et durs.

Toutefois, un tel produit n'est pas exploitable/réutilisable en tant que tel et nécessite au moins un traitement complémentaire des polymères et des particules de faibles tailles (typiquement ≤ 20 mm) qu'il contient encore après le prétraitement.

Parmi les possibles particules millimétriques et submillimétriques présentes dans le cas des produits composites provenant de produits d'étanchéité bitumeux et qui font état de propriétés bénéfiques, on peut citer par exemples : les fibres [qui apportent aussi des propriétés mécaniques (dureté, résistance) à la matrice] et les charges qui permettent d'optimiser le coût. Pour que le rôle joué par ces particules soit optimal, dans le produit valorisé, il est nécessaire qu'elles soient réduites à une taille microscopique. D'autres composants, qui sont eux dissous dans le liant bitumineux, nécessitent aussi d'être travaillés avant possible réutilisation dudit liant. Cela est par exemple le cas pour les polymères [qui apportent des propriétés mécaniques (élastiques ou plastiques) à la matrice],

Préférentiellement, ces particules, qui sont présentes dans les produits prétraités avec de tailles centimétriques, devraient être réduites à des dimensions =< 100 µm.

On connait déjà au moins deux types de dispositifs qui sont prévus pour réaliser au moins le traitement de réduction dimensionnelle visé, mais ils présentent chacun des limitations notables.

Ainsi, les moulins colloïdaux (par exemple du type connu sous la dénomination Trigonal par la société Siefer) sont destinés au broyage humide et fin de matières dures et granuleuses et permettant de réaliser un cisaillement intense avec un temps séjour court.

Toutefois, cette solution est très sensible aux taux de dilution des particules et s'il y a trop de particules, le moulin risque de se bloquer. De plus, cette solution n'est pas robuste pour des particules dures car elles détruisent les couteaux. Enfin, si les polymères sont trop durs, le moulin colloïdal n'a pas le temps de les traiter complètement et des résidus (infondus) de plusieurs mm subsistent. L'usure des lames peut être très rapide selon les types de matières premières à traiter et un changement fréquent est nécessaire. Leur coût de fonctionnement est par conséquent très élevé.

Comme autre solution connue, les filtres continus (voir par exemple : US 2010/127106 et US 2010/190 893) constituent des machines d'homogénéisation, de raffinage et de filtration (avec plusieurs lames qui se déplacent dans un panier percé en raclant la paroi intérieure) et permettent un cisaillement modéré avec un temps de séjour modéré. Dans un tel filtre, l'étirement des polymères est réalisé contre la paroi du panier qui ne bénéficie pas d'une chauffe spécifique (dans le flux de produit). Les particules inférieures au mm ne sont pas traitées (elles passent à travers les trous) et les particules macroscopique (> mm) dures sédimentent au fond du panier et doivent être sorties à part du flux de produit (séparation et production de déchets). Les fibres ne sont pas bien traitées, de nombreuses zones mortes dans le filtre entraînent la sédimentation des fibres et le bouchage partiel du filtre après un certain temps de fonctionnement (maintenance fréquente).

Ainsi, dans une perspective de réutilisation du produit traité, il y a lieu objectivement de conclure qu'aucune des deux solutions connues précitées ne permet un traitement complet de produits composites à la base thermoplastique (notamment bitumineux) contenant des polymères et des particules solides (granulés, fibres). Dans aucun des deux solutions, les particules dures macroscopiques (> mm) ne sont traitées. L'étirement des polymères est en outre partiel et il se fait à une température identique à celle du produit. Les fibres ne sont traitées de manière satisfaisante dans aucun des deux cas.

La présente invention a pour but essentiel de pallier les inconvénients des solutions précitées.

A cet effet, elle a pour objet un raffineur pour le traitement de produits composites à base de matière(s) thermoplastique(s), notamment polymérique(s) et/ou bitumineuse(s), ces produits étant avantageusement prétraités et sous forme visqueuse, et contenant des éléments fragmentaires et/ou particulaires solides, de nature(s) minérale et/ou organique, tels que des particules ou des fibres, ce raffineur comprenant une enceinte à paroi cylindrique, définissant une chambre de traitement pourvue d'au moins une ouverture d'alimentation de produits à traiter et d'au moins une ouverture de sortie de produits traités, et un tambour cylindrique, monté mobile dans l'enceinte cylindrique et de diamètre inférieur à celui de ce dernier, les axes longitudinaux de symétrie respectivement de l'enceinte extérieure et du tambour intérieur étant parallèles entre eux, et comprenant un moyen de chauffage de la chambre de traitement, le raffineur étant caractérisé en ce que le tambour est monté dans l'enceinte extérieure avec faculté de déplacement en rotation autour de son axe longitudinal et avec faculté de déplacement de son axe longitudinal selon une trajectoire circulaire autour de l'axe longitudinal de ladite enceinte, les deux types de déplacements possibles précités étant commandés par des moyens d'entrainement et/ou d'actionnement indépendants, permettant leur réalisation sélective ou combinée.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1A], [Fig. 1B] et [Fig. 1C] sont respectivement des vues en élévation selon deux directions différentes et une vue de dessus d'un raffineur selon l'invention ;
[Fig. 2A] et [Fig. 2B] sont des vues en coupe, selon un plan vertical contenant l'axe de symétrie de l'enceinte extérieure, et respectivement en élévation et en perspective, d'un raffineur tel que représenté figures 1 (à deux échelles différentes) ;
[Fig. 3] est une vue en coupe selon un plan perpendiculaire à l'axe de symétrie de l'enceinte et de dessus du raffineur des figures 1 ;
[Fig. 4] illustre par le biais des figures 4A à 4C des séries de quatre vues montrant chacune un type de mouvement, simple (ou élémentaire- figures 4A et 4B) ou combiné (ou complexe- figure 4C), pouvant être réalisé par l'ensemble [tambour/enceinte] faisant partie du raffineur selon l'invention, et,
[Fig. 5] est une représentation schématique, en élévation, d'une installation de traitement et de revalorisation selon l'invention comprenant au moins un raffineur tel que ressortant des figures 1 et 2.

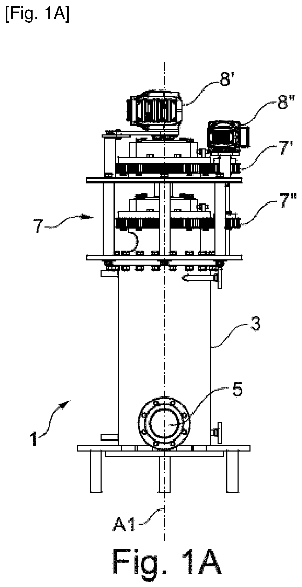

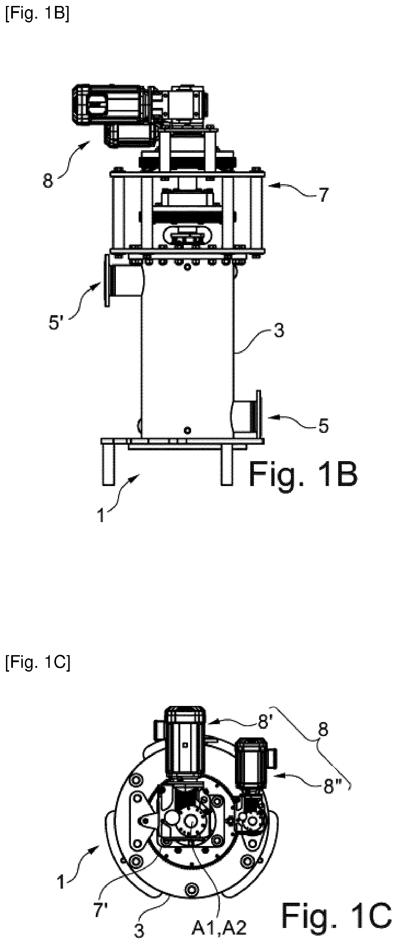

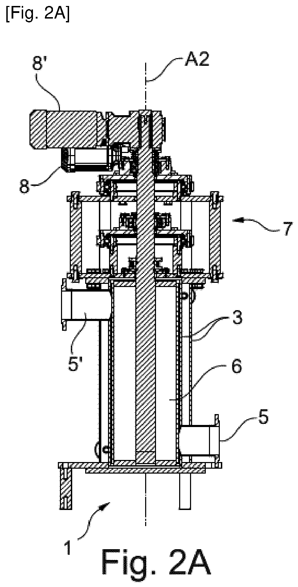

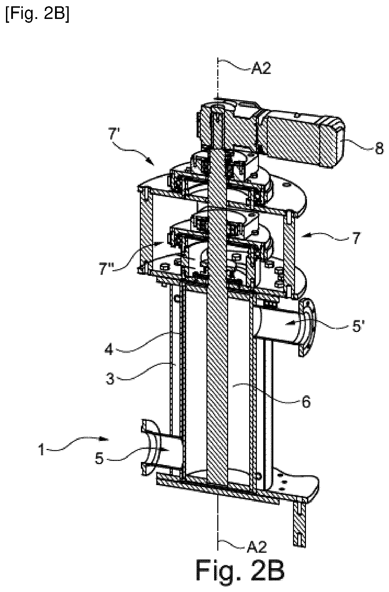

Les figures 1 et 2 notamment illustrent un raffineur 1 pour le traitement de produits 2 composites à base de matière(s) thermoplastique(s), notamment polymérique(s) et/ou bitumineuse(s), ces produits 2 étant avantageusement prétraités et sous forme visqueuse, et contenant des éléments fragmentaires et/ou particulaires solides, de nature(s) minérale et/ou organique, tels que des particules ou des fibres.

Ce raffineur 1 comprend une enceinte 3 à paroi cylindrique, définissant une chambre de traitement 4 pourvue d'au moins une ouverture d'alimentation 5 de produits 2 à traiter et d'au moins une ouverture de sortie 5' de produits 2' traités, et un tambour cylindrique 6, monté mobile dans l'enceinte cylindrique 3 et de diamètre inférieur à celui de ce dernier, les axes longitudinaux de symétrie A1, A2 respectivement de l'enceinte extérieure 3 et du tambour intérieur 6 étant parallèles entre eux.

Conformément à l'invention, ledit raffineur 1 comprend un moyen de chauffage de la chambre de traitement 4 et le tambour 6 (cylindrique) est monté dans l'enceinte extérieure 3 (cylindrique) avec faculté de déplacement en rotation autour de son axe longitudinal A2 et avec faculté de déplacement de son axe longitudinal A2 selon une trajectoire circulaire autour de l'axe longitudinal A1 de ladite enceinte 3, les deux types de déplacements possibles précités étant commandés par des moyens 7, 8 d'entrainement et/ou d'actionnement indépendants, permettant leur réalisation sélective ou combinée.

La combinaison dans le raffineur 1 des effets synergiques de la chaleur et des mouvements absolus et relatifs du tambour 6 et de l'enceinte 3 (actions mécaniques de triturage, de cisaillement et de malaxage) permet un traitement efficient et complet de produits composites de nature thermoplastique (notamment en tant qu'intrants sous forme visqueuse, en particulier à base de bitume contenant des polymères et des particules solides (notamment granulés et fibres). Ainsi, et grâce aux dispositions techniques précitées :

1) Les particules dures macroscopiques (> mm) sont traitées. Elles sont cisaillées/broyées entre la paroi du cylindre (enceinte extérieure 3) et la paroi du tambour 6. En cas d'usure, le coût de remplacement d'un cylindre/tambour est relativement faible (notamment moins cher que le réaffutage des lames d'un broyeur colloïdal). Effet collatéral, les particules solides les plus dures présentes dans le produit composite réalisent une attrition sur les particules les plus molles.

2) La fragmentation des granulés et/ou des fibres présentes est complète. Granulés et/ou fibres sont étirées et réduites dans l'entrefer e par le cisaillement entre la paroi du tambour 6 et la paroi du cylindre 3. Ce cylindre 3 étant chauffé, l'étirement est réalisé à une température contrôlée qui peut être différente de celle du produit intrant. La consigne de température peut être définie pour être supérieure à des seuils de températures de la matière à fragmenter (ex : Tg température de transition vitreuse). Un fonctionnement au-delà de la Tg facilite grandement la fragmentation de la matière et la performance du raffineur 1.

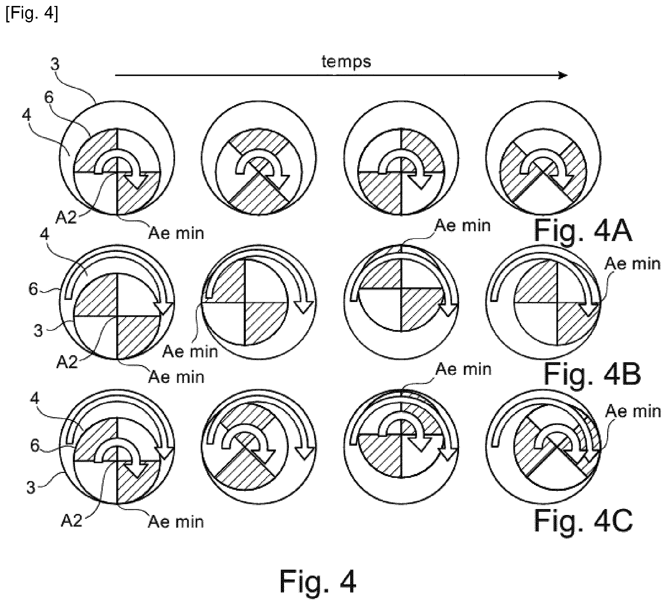

Compte tenu de la construction du raffineur 1, l'entrefer e variable défini entre le tambour 6 et l'enceinte 3 présente une valeur minimale (le long d'un axe longitudinal Ae min parallèle aux axes A1 et A2) et détermine ainsi le degré maximum de réduction dimensionnelle des particules/fragments solides présents dans l'intrant traité et l'intensité d'évitement des matières constituant la matière thermoplastique du produit composite 2 traité. Cet entrefer minimal est, en fonction du type de mouvement du tambour 6, soit fixe, soit mobile (cf. figures 4A à 4C).

Avantageusement, les axes longitudinaux A1, A2 respectivement de l'enceinte extérieure 3 et du tambour intérieur 6 sont orientés sensiblement verticalement, les moyens d'entrainement 7, et éventuellement les moyens d'actionnement 8, étant avantageusement installés sur l'enceinte 3, en partie supérieure de cette dernière, par exemple sur un couvercle opposé au fond de l'enceinte 3 et fermant cette dernière en partie supérieure. Deux ensembles moteurs-réducteurs distincts 8', 8"peuvent former les moyens d'actionnement 8, associés chacun à un moyen 7 de transmission/transformation de mouvement spécifique (renvoi, décalage/déplacement d'axe de rotation, engrènement, ...).

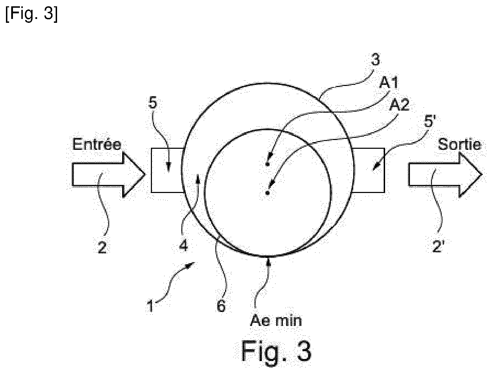

Préférentiellement, l'ouverture d'alimentation 5 est aménagée en partie inférieure de l'enceinte 3 et l'ouverture de sortie 5' est aménagée en partie supérieure de cette dernière, ces deux ouvertures 5 et 5' étant situées à l'opposé l'une de l'autre par rapport à l'axe longitudinal A1 de l'enceinte 3 et dans un plan contenant cet axe (cf. figures 2 et 3).

En accord avec une caractéristique possible de l'invention, autorisant un calibrage du raffineur 1 et un réglage des propriétés du traitement qu'il réalise, ledit raffineur 1 peut comprendre des moyens de guidage, préférentiellement présents en parties supérieure et inférieure de l'enceinte 3 et assurant le déplacement de l'axe longitudinal A2 du tambour 6 selon une trajectoire circulaire dans l'enceinte 3 autour de l'axe longitudinal A1 de cette dernière, ces moyens étant avantageusement configurés pour autoriser un réglage de l'entrefer e (notamment de sa valeur minimale) entre la face extérieure du tambour 6 et la face intérieure de l'enceinte 3.

Selon une autre caractéristique possible de l'invention, le raffineur peut comprendre un moyen de pilotage des deux moyens d'actionnement indépendants, aptes et destinés à réaliser les deux types de déplacements du tambour 6, en vue de leur commande séparée ou combinée, ledit moyen de pilotage faisant éventuellement partie d'un moyen global de contrôle et de gestion d'une installation de traitement 11 intégrant ledit raffineur 1.

L'injection contrôlée des produits, sous forme visqueuse, est par exemple réalisée par une pompe de circulation 12, adaptée aux produits composites à traiter, est reliée à l'ouverture d'alimentation 5 située en partie basse de l'enceinte 3. Toutefois, cette injection peut aussi être réalisée par gravité à partir d'un réservoir de stockage temporaire chauffé ou à partir d'un autre poste de traitement en amont.

Afin de pouvoir vérifier aisément le degré de traitement des produits injectés et de disposer d'une information pratique et fiable pour contrôler leur injection, ainsi que le renouvellement des produits dans la chambre 4, le raffineur 1 est avantageusement muni de capteurs de mesure des effort(s) appliqué(s) pour le déplacement du tambour 6 autour de son axe longitudinal A2 et/ou dans l'enceinte 3. Des capteurs de température et éventuellement de viscosité peuvent également être prévus.

Le raffineur 1 présente différentes possibilités de réglage, à savoir :
- deux paramètres de réglage de l'intensité du travail mécanique (cisaillement) à savoir : la vitesse de déplacement/rotation du tambour 6 (par exemple : vitesse de rotation sur lui-même : 200 tours/min / vitesse de déplacement excentrée : 60 tours/min) et la valeur minimale de l'entrefer e (par exemple : 0,5 à 0,1 mm).
- un paramètre de durée du traitement, à savoir le temps de séjour des produits dans la chambre 4 (par exemple de 10 à 50 s).

Un certain nombre de dispositions constructives pratiques, possibles dans le cadre de l'invention, sont décrites ci-après en relation avec les figures annexées.

Ainsi, l'enceinte 3 est avantageusement composée de deux viroles ou portions tubulaires cylindriques espacées par un intervalle pour former une double enveloppe dans laquelle circule un fluide caloporteur (huile thermique circulant entre les deux parois de l'enveloppe).

Les matériaux qui sont employés pour réaliser lesdites viroles, sont des aciers spéciaux adaptés à supporter des températures élevées, disposant d'une bonne conductibilité thermique, et résistant à l'abrasion de la matière présente et traitée dans la chambre 4. Ces choix confèrent une grande efficacité à l'échange thermique entre l'enceinte 3 et la matière présente dans la chambre de travail 4. Toutes les surfaces en contact avec la matière sont réusinées après assemblage par soudure.

Le tambour 6 est quant à lui par exemple constitué d'un cylindre cerux usiné dans un acier prétraité supportant l'abrasion. Ce tambour 6 est assemblé sur un arbre définissant l'axe A2, cet arbre étant guidé par deux paliers et entrainé par un motoréducteur principal 8'.

Un motoréducteur secondaire 8" (forant avec 8' les moyens d'actionnement 8) permet l'entrainement de l'équipage d'excentricité faisant partie des moyens 7 de transmission/transformation de mouvement. Cet équipage est par exemple essentiellement constitué de deux couronnes dentées 7' et 7" à billes ou à rouleaux pour le guidage et le déplacement du tambour 6, qui sont espacées et supportent des platines avec des mécanismes de réglage de ladite excentricité (voir figures 1 et 2 notamment).

Un dispositif d'étanchéité dynamique à double mouvement de rotation est préférentiellement prévu pour rendre étanche ladite chambre 4 de travail de la matière.

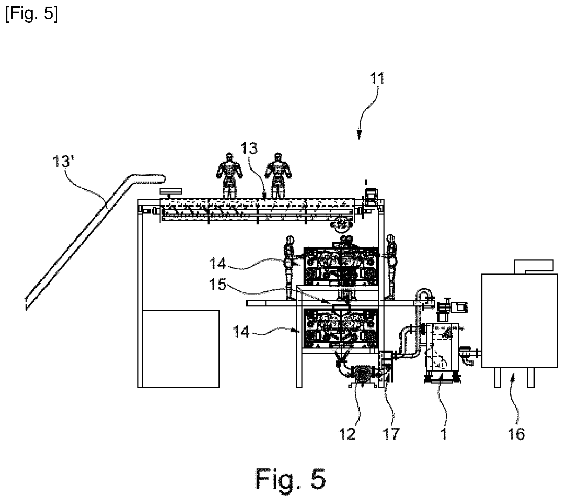

L'invention concerne également, comme le montre la figure 5, une installation 11 de traitement et de revalorisation de produits composites à base thermoplastique, par exemple de déchets intégrant à titre majoritaire des produits bitumineux, notamment des membranes bitumineuses, cette installation 11 comprenant plusieurs postes 13, 14, 15, 1 de traitements successifs.

Cette installation 11 est caractérisée en ce qu'elle comprend, en tant que poste de traitement, au moins un raffineur 1 tel que décrit ci-dessus, préférentiellement en tant que dernier ou avant-dernier poste de traitement.

L'installation 11 peut, par exemple, comprendre (comme premier poste) au moins un mélangeur chauffant 13, alimenté en produits composites (éventuellement prétraités), par exemple du type déchets de chantiers ou d'usines à base bitumineuse, amenés par un convoyeur 13' par exemple.

L'extrant chaud et visqueux du mélangeur 13 traverse au moins un, préférentiellement deux, broyeur(s) à rouleaux 14 associé(s) à un séparateur 15 de polluants macroscopiques (dispositif éjecteur/extracteur) avant d'être transféré directement ou indirectement par une pompe 12 dans le raffineur 1. L'extrant (produits traités 2') du raffineur 1 peut être stocké dans un réservoir 16.

Eventuellement, un poste de traitement additionnel 17 (filtre, délicérateur, ...) peut être installé avant le raffineur1.

Enfin, l'invention porte aussi sur un procédé de réduction des composants de produits composites à base de matière(s) thermoplastique(s), notamment polymérique(s), contenant des éléments fragmentaires et/ou particulaires solides, minéraux et/ou organiques, tels que des particules ou des fibres, en utilisant un raffineur 1 tel que décrit ci-dessus.

Ce procédé est caractérisé en ce qu'il consiste à injecter dans l'enceinte 3 du raffineur 1, par son ouverture d'alimentation 5, des produits composites 2 à traiter, préférentiellement prétraités et visqueux, ce de manière contrôlée, en continue ou séquentiellement, à traiter ces produits dans l'enceinte 3 par chauffage et par déplacement, continu ou intermittent, du tambour 6 dans l'enceinte 3, ce déplacement s'effectuant soit en rotation autour de son axe longitudinal A2, soit selon une trajectoire circulaire autour de l'axe longitudinal A1 de l'enceinte 3 ou encore en combinant les deux mouvements précités.

Comme indiqué précédemment, il peut être envisagé de contrôler le cisaillement en ajustant l'entrefer e entre le tambour 6 et l'enceinte 3 et en déterminant la vitesse et la nature du déplacement du tambour 6 dans l'enceinte 3.

Pour optimiser le fonctionnement du raffineur 1 et le cas échéant éviter son éventuel blocage par bourrage, le procédé peut consister, de manière régulière ou suite à une détection d'un effort résistant supérieur à une valeur seuil, d'inverser au moins temporairement l'un au moins des deux mouvements de déplacement du tambour 6.

En variante, ou alternativement, à un mouvement unidirectionnel, le procédé peut aussi consister à déplacer l'axe longitudinal A1 du tambour 6 autour de l'axe longitudinal de l'enceinte selon un mouvement oscillant de va-et-vient, centré sur l'ouverture d'alimentation 5, par exemple d'environ 100° de part et d'autre de ladite ouverture 5.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Raffineur (1) pour le traitement de produits (2) composites à base de matière(s) thermoplastique(s), notamment polymérique(s) et/ou bitumineuse(s), ces produits (2) étant avantageusement prétraités et sous forme visqueuse, et contenant des éléments fragmentaires et/ou particulaires solides, de nature(s) minérale et/ou organique, tels que des particules ou des fibres, ce raffineur (1) comprenant une enceinte (3) à paroi cylindrique, définissant une chambre de traitement (4) pourvue d'au moins une ouverture d'alimentation (5) de produits (2) à traiter et d'au moins une ouverture de sortie (5') de produits (2') traités, et un tambour cylindrique (6), monté mobile dans l'enceinte cylindrique (3) et de diamètre inférieur à celui de ce dernier, les axes longitudinaux de symétrie (A1, A2) respectivement de l'enceinte extérieure (3) et du tambour intérieur (6) étant parallèles entre eux, et comprenant un moyen de chauffage de la chambre de traitement (4), le raffineur (1) étant **caractérisé en ce que** le tambour (6) est monté dans l'enceinte extérieure (3) avec faculté de déplacement en rotation autour de son axe longitudinal (A2) et avec faculté de déplacement de son axe longitudinal (A2) selon une trajectoire circulaire autour de l'axe longitudinal (A1) de ladite enceinte (3), les deux types de déplacements possibles précités étant commandés par des moyens (7, 8) d'entrainement et/ou d'actionnement indépendants, permettant leur réalisation sélective ou combinée.

2. Raffineur selon la revendication 1, **caractérisé en ce que** les axes longitudinaux (A1, A2) de l'enceinte extérieure (3) et du tambour intérieur (6) sont orientés sensiblement verticalement.

3. Raffineur selon la revendication 2, **caractérisé en ce que** les moyens d'entrainement (7), et éventuellement les moyens d'actionnement (8), sont installés sur l'enceinte (3), en partie supérieure de cette dernière.

4. Raffineur selon l'une quelconque des revendications 1 à 3, **caractérisé en ce que** l'ouverture d'alimentation (5) est aménagée en partie inférieure de l'enceinte (3) et **en ce que** l'ouverture de sortie (5') est aménagée en partie supérieure de cette dernière, ces deux ouvertures (5 et 5') étant situées à l'opposé l'une de l'autre par rapport à l'axe longitudinal (A1) de l'enceinte (3) et dans un plan contenant cet axe.

5. Raffineur selon l'une quelconque des revendications 1 à 4, **caractérisé en ce que** des moyens de guidage, préférentiellement présents en parties supérieure et inférieure de l'enceinte (3), assurent le déplacement de l'axe longitudinal (A2) du tambour (6) selon une trajectoire circulaire dans l'enceinte (3) autour de l'axe longitudinal (A1) de cette dernière.

6. Raffineur selon la revendication 5, **caractérisé en ce que** les moyens de guidage assurant le déplacement de l'axe longitudinal (A2) du tambour (6) sont configurés pour autoriser un réglage de l'entrefer (e) entre la face extérieure du tambour (6) et la face intérieure de l'enceinte (3).

7. Raffineur selon l'une quelconque des revendications 1 à 6, **caractérisé en ce qu'**il comprend un moyen de pilotage des deux moyens d'actionnement indépendants, aptes et destinés à réaliser les deux types de déplacements du tambour (6), en vue de leur commande séparée ou combinée

8. Raffineur selon la revendication 7, **caractérisé en ce que** ledit moyen de pilotage fait partie d'un moyen global de contrôle et de gestion d'une installation de traitement (11) intégrant ledit raffineur (1).

9. Raffineur selon l'une quelconque des revendications 1 à 8, **caractérisé en ce qu'**une pompe de circulation (12), adaptée aux produits composites à traiter, est reliée à l'ouverture d'alimentation (5) située en partie basse de l'enceinte (3).

10. Raffineur selon l'une quelconque des revendications 1 à 9, **caractérisé en ce qu'**il est muni de capteurs de mesure des effort(s) appliqué(s) pour le déplacement du tambour (6) autour de son axe longitudinal (A2) et/ou dans l'enceinte (3).

11. Installation (11) de traitement et de revalorisation de produits composites à base thermoplastique, par exemple de déchets intégrant à titre majoritaire des produits bitumineux, notamment des membranes bitumineuses, cette installation (11) comprenant plusieurs postes (13, 14, 15, 1) de traitements successifs, installation (11) **caractérisée en ce qu'**elle comprend, en tant que poste de traitement, au moins un raffineur (1) selon l'une quelconque des revendications 1 à 10, préférentiellement en tant que dernier ou avant-dernier poste de traitement.

12. Procédé de réduction des composants de produits composites à base de matière(s) thermoplastique(s), notamment polymérique(s), contenant des éléments fragmentaires et/ou particulaires solides, minéraux et/ou organiques, tels que des particules ou des fibres, en utilisant un raffineur (1) selon l'une quelconque des revendications 1 à 10, procédé **caractérisé en ce qu'**il consiste à injecter dans l'enceinte (3) du raffineur (1), par son ouverture d'alimentation (5), des produits composites (2) à traiter, ce de manière contrôlée, en continue ou séquentiellement, à traiter ces produits dans l'enceinte (3) par chauffage et par déplacement, continu ou intermittent, du tambour (6) dans l'enceinte (3), ce déplacement s'effectuant soit en rotation autour de son axe longitudinal (A2), soit selon une trajectoire circulaire autour de l'axe longitudinal (A1) de l'enceinte (3) ou encore en combinant les deux mouvements précités.

13. Procédé selon la revendication 12, **caractérisé en ce qu'**il consiste à contrôler le cisaillement en ajustant l'entrefer (e) entre le tambour (6) et l'enceinte (3) et en déterminant la vitesse et la nature du déplacement du tambour (6) dans l'enceinte (3).

14. Procédé selon la revendication 12 ou 13, **caractérisé en ce qu'**il consiste, de manière régulière ou suite à une détection d'un effort résistant supérieur à une valeur seuil, d'inverser au moins temporairement l'un au moins des deux mouvements de déplacement du tambour (6).

15. Procédé selon l'une des revendications 12 à 14, **caractérisé en ce qu'**il consiste à déplacer l'axe longitudinal (A1) du tambour (6) autour de l'axe longitudinal de l'enceinte selon un mouvement oscillant de va-et-vient, centré sur l'ouverture d'alimentation (5), par exemple d'environ 100° de part et d'autre de ladite ouverture (5).

## Patentansprüche

1. Refiner (1) zur Behandlung von Verbundprodukten (2) auf der Basis von einem oder mehreren Thermoplasten, insbesondere polymeren und/oder bituminösen, wobei diese Produkte (2) vorteilhafterweise vorbehandelt werden und in viskoser Form vorliegen und feste stückige und/oder partikelförmige Elemente mineralischer und/oder organischer Art(en) wie Partikel oder Fasern enthalten, wobei dieser Refiner (1) ein eine Behandlungskammer (4) definierendes Gehäuse (3) mit zylindrischer Wand umfasst, das mit mindestens einer Beschickungsöffnung (5) für zu behandelnde Produkte (2) und mit mindestens einer Austrittsöffnung (5') für behandelte Produkte (2') und mit einer zylindrischen Trommel (6), die beweglich in dem zylindrischen Gehäuse (3) gelagert ist und einen kleineren Durchmesser als dieses hat, versehen ist, wobei die Symmetrielängsachsen (A1, A2) des äußeren Gehäuses (3) und der inneren Trommel (6) zueinander parallel sind, und ein Mittel zum Heizen der Behandlungskammer (4) umfasst, wobei der Refiner (1) **dadurch gekennzeichnet ist, dass** die Trommel (6) in dem äußeren Gehäuse (3) mit Möglichkeit zur rotatorischen Verlagerung um ihre Längsachse (A2) und mit Möglichkeit zur Verlagerung ihrer Längsachse (A2) entlang einer Kreisbahn um die Längsachse (A1) des Gehäuses (3) gelagert ist, wobei die beiden vorgenannten möglichen Verlagerungsarten durch unabhängige Antriebs- und/oder Betätigungsmittel (7, 8) gesteuert werden, die ihre selektive oder kombinierte Ausführung ermöglichen.

2. Refiner nach Anspruch 1, **dadurch gekennzeichnet, dass** die Längsachsen (A1, A2) des äußeren Gehäuses (3) und der inneren Trommel (6) im Wesentlichen vertikal ausgerichtet sind.

3. Refiner nach Anspruch 2, **dadurch gekennzeichnet, dass** die Antriebsmittel (7) und gegebenenfalls die Betätigungsmittel (8) auf dem Gehäuse (3) an seinem oberen Teil installiert sind.

4. Refiner nach einem der Ansprüche 1 bis 3, **dadurch gekennzeichnet, dass** die Beschickungsöffnung (5) im unteren Teil des Gehäuses (3) angeordnet ist und dass die Austrittsöffnung (5') in seinem oberen Teil angeordnet ist, wobei diese beiden Öffnungen (5 und 5') in Bezug auf die Längsachse (A1) des Gehäuses (3) und in einer diese Achse enthaltenden Ebene entgegengesetzt zueinander gelegen sind.

5. Refiner nach einem der Ansprüche 1 bis 4, **dadurch gekennzeichnet, dass** Führungsmittel, die bevorzugt im oberen und unteren Teil des Gehäuses (3) vorhanden sind, die Verlagerung der Längsachse (A2) der Trommel (6) entlang einer Kreisbahn in dem Gehäuse (3) um dessen Längsachse (A1) gewährleisten.

6. Refiner nach Anspruch 5, **dadurch gekennzeichnet, dass** die Führungsmittel, welche die Verlagerung der Längsachse (A2) der Trommel (6) gewährleisten, dazu ausgestaltet sind, ein Einstellen des Spalts (e) zwischen der Außenseite der Trommel (6) und der Innenseite des Gehäuses (3) zuzulassen.

7. Refiner nach einem der Ansprüche 1 bis 6, **dadurch gekennzeichnet, dass** er ein Ansteuerungsmittel für die beiden unabhängigen Betätigungsmittel, die dazu geeignet und bestimmt sind, die beiden Verlagerungsarten der Trommel (6) auszuführen, im Hinblick auf ihre getrennte oder kombinierte Steuerung umfasst

8. Refiner nach Anspruch 7, **dadurch gekennzeichnet, dass** das Ansteuerungsmittel zu einem globalen Mittel zur Kontrolle und Verwaltung einer Behandlungsanlage (11) gehört, die den Refiner (1) beinhaltet.

9. Refiner nach einem der Ansprüche 1 bis 8, **dadurch gekennzeichnet, dass** eine Umwälzpumpe (12), die an die zu behandelten Verbundprodukte angepasst ist, mit der im unteren Teil des Gehäuses (3) gelegenen Beschickungsöffnung (5) verbunden ist.

10. Refiner nach einem der Ansprüche 1 bis 9, **dadurch gekennzeichnet, dass** er mit Sensoren zum Messen der Kraft bzw. Kräfte versehen ist, die zur Verlagerung der Trommel (6) um ihre Längsachse (A2) und/oder in dem Gehäuse (3) ausgeübt wird bzw. werden.

11. Anlage (11) zur Behandlung und Aufbereitung von Verbundprodukten auf thermoplastischer Basis, beispielsweise von Abfällen, die mehrheitlich bituminöse Produkte, insbesondere Bitumenbahnen, beinhalten, wobei diese Anlage (11) mehrere aufeinander folgende Behandlungsstationen (13, 14, 15, 1) umfasst, wobei die Anlage (11) **dadurch gekennzeichnet ist, dass** sie als Behandlungsstation mindestens einen Refiner (1) nach einem der Ansprüche 1 bis 10, bevorzugt als letzte oder vorletzte Behandlungsstation, umfasst.

12. Verfahren zur Zerkleinerung von Bestandteilen von Verbundprodukten auf der Basis von einem oder mehreren Thermoplasten, insbesondere polymeren, die feste stückige und/oder partikelförmige, mineralische und/oder organische Elemente wie Partikel oder Fasern enthalten, unter Verwendung eines Refiners (1) nach einem der Ansprüche 1 bis 10,
wobei das Verfahren **dadurch gekennzeichnet ist, dass** es darin besteht, in das Gehäuse (3) des Refiners (1) durch seine Beschickungsöffnung (5) zu behandelnde Verbundprodukte (2) kontrolliert, kontinuierlich oder sequenziell einzuleiten, diese Produkte in dem Gehäuse (3) durch Erhitzen und durch kontinuierliche oder intermittierende Verlagerung der Trommel (6) in dem Gehäuse (3) zu behandeln, wobei diese Verlagerung entweder rotatorisch um ihre Längsachse (A2) oder entlang einer Kreisbahn um die Längsachse (A1) des Gehäuses (3) oder aber durch Kombinieren der beiden vorgenannten Bewegungen erfolgt.

13. Verfahren nach Anspruch 12, **dadurch gekennzeichnet, dass** es darin besteht, die Scherung zu kontrollieren, indem der Spalt (e) zwischen der Trommel (6) und dem Gehäuse (3) eingestellt wird und indem die Geschwindigkeit und die Art der Verlagerung der Trommel (6) in dem Gehäuse (3) bestimmt werden.

14. Verfahren nach Anspruch 12 oder 13, **dadurch gekennzeichnet, dass** es darin besteht, mindestens eine der beiden Verlagerungsbewegungen der Trommel (6) regelmäßig oder nach einer Detektion einer Widerstandskraft über einem Schwellenwert umzukehren.

15. Verfahren nach einem der Ansprüche 12 bis 14, **dadurch gekennzeichnet, dass** es darin besteht, die Längsachse (A1) der Trommel (6) um die Längsachse des Gehäuses mit einer oszillierenden Hin-und-Her-Bewegung, die auf die Beschickungsöffnung (5) zentriert ist, zum Beispiel um etwa 100° beidseits der Öffnung (5), zu verlagern.

## Claims

1. Refiner (1) for treating composite products (2) made from thermoplastic material(s), in particular polymeric and/or bituminous material(s), these products (2) being advantageously pretreated and in viscous form, and containing solid fragmentary and/or particulate elements, of mineral and/or organic nature(s), such as particles or fibres, this refiner (1) comprising an enclosure (3) with a cylindrical wall, defining a treatment chamber (4) provided with at least one feed opening (5) for products (2) to be treated and at least one outlet opening (5') for treated products (2'), and a cylindrical drum (6), which is mounted so as to be able to move in the cylindrical enclosure (3) and has a diameter that is smaller than that of the latter, the longitudinal axes of symmetry (A1, A2) of the outer enclosure (3) and the inner drum (6), respectively, being parallel to each other,
and comprising a means for heating the treatment chamber (4), the refiner (1) being **characterized in that** the drum (6) is mounted in the outer enclosure (3) so that it is able to move in rotation about its longitudinal axis (A2) and so that its longitudinal axis (A2) is able to move along a circular path around the longitudinal axis (A1) of said enclosure (3), the two types of possible movements mentioned above being controlled by separate drive and/or actuation means (7, 8), allowing them to be effected selectively or in combination.

2. Refiner according to Claim 1, **characterized in that** the longitudinal axes (A1, A2) of the outer enclosure (3) and the inner drum (6) are oriented substantially vertically.

3. Refiner according to Claim 2, **characterized in that** the drive means (7), and possibly the actuation means (8), are installed on the enclosure (3), at the top of the latter.

4. Refiner according to any one of Claims 1 to 3, **characterized in that** the feed opening (5) is provided at the bottom of the enclosure (3) and **in that** the outlet opening (5') is provided at the top of the latter, these two openings (5 and 5') being situated opposite each other with respect to the longitudinal axis (A1) of the enclosure (3) and in a plane containing this axis.

5. Refiner according to any one of Claims 1 to 4, **characterized in that** guide means, which are preferably present at the top and bottom of the enclosure (3), provide the movement of the longitudinal axis (A2) of the drum (6) along a circular path in the enclosure (3) around the longitudinal axis (A1) of the latter.

6. Refiner according to Claim 5, **characterized in that** the guide means providing the movement of the longitudinal axis (A2) of the drum (6) are configured to allow the gap (e) between the outer face of the drum (6) and the inner face of the enclosure (3) to be adjusted.

7. Refiner according to any one of Claims 1 to 6, **characterized in that** it comprises a control means for controlling the two separate actuation means, which are able and intended to implement the two types of movements of the drum (6), with a view to controlling them separately or in combination.

8. Refiner according to Claim 7, **characterized in that** said control means forms part of a means for overall control and management of a treatment installation (11) incorporating said refiner (1).

9. Refiner according to any one of Claims 1 to 8, **characterized in that** a circulation pump (12), which is adapted to the composite products to be treated, is connected to the feed opening (5) situated at the bottom of the enclosure (3).

10. Refiner according to any one of Claims 1 to 9, **characterized in that** it is provided with sensors for measuring the force(s) applied in order to move the drum (6) about its longitudinal axis (A2) and/or in the enclosure (3).

11. Installation (11) for treating and upgrading composite products made from thermoplastic, for example waste incorporating mostly bituminous products, in particular bituminous membranes, this installation (11) comprising several successive treatment stations (13, 14, 15, 1), the installation (11) being **characterized in that** it comprises, as a treatment station, at least one refiner (1) according to any one of Claims 1 to 10, preferably as the last or penultimate treatment station.

12. Method for reducing the components of composite products made from thermoplastic material(s), in particular polymeric material(s), containing solid fragmentary and/or particulate elements, of mineral and/or organic nature, such as particles or fibres, by using a refiner (1) according to any one of Claims 1 to 10,
the method being **characterized in that** it consists in injecting, into the enclosure (3) of the refiner (1), via its feed opening (5), composite products (2) to be treated, in a controlled manner, continuously or sequentially, treating these products in the enclosure (3) by heating and by continuously or intermittently moving the drum (6) in the enclosure (3), this movement being effected either in rotation about its longitudinal axis (A2) or along a circular path around the longitudinal axis (A1) of the enclosure (3) or indeed by combining the two abovementioned movements.

13. Method according to Claim 12, **characterized in that** it consists in controlling the shearing by adjusting the gap (e) between the drum (6) and the enclosure (3) and by determining the speed and the nature of the movement of the drum (6) in the enclosure (3).

14. Method according to Claim 12 or 13, **characterized in that** it consists, on a regular basis or following the detection of a resistant force greater than a threshold value, in at least temporarily inverting at least one of the two movements of the drum (6).

15. Method according to one of Claims 12 to 14, **characterized in that** it consists in moving the longitudinal axis (A1) of the drum (6) around the longitudinal axis of the enclosure in an oscillating back-and-forth movement, centred on the feed opening (5), for example by about 100° to either side of said opening (5).
